# EUROPÄISCHE PATENTSCHRIFT

(11) **EP 2 314 795 B1**
(45) Veröffentlichungstag und Bekanntmachung des Hinweises auf die Patenterteilung: **26.11.2014**
(21) Anmeldenummer: 10187559.9
(22) Anmeldetag: 14.10.2010
(51) Int. Cl.: E04F 13/08, E04F 15/024, E06B 1/60, C08J 9/40, B29C 44/56

(54) **Ausgleichselement**
Compensating element
Elément d'équilibrage

(30) Priorität: 22.10.2009 DE 102009045923
(43) Veröffentlichungstag der Anmeldung: 27.04.2011
(73) Patentinhaber: HILTI Aktiengesellschaft, 9494 Schaan (LI)
(72) Erfinder: Schäffer, Marc, 6800 Feldkirch-Nofels (AT); Oberndorfer, Georg, 6800 Feldkirch (AT); Goldt, Mathias, 6800 Feldkirch (AT); Dierker, Sascha, 86504 Merching (DE)
(74) Vertreter: Hilti Aktiengesellschaft Corporate Intellectual Property

(56) Entgegenhaltungen:
- EP-A2- 0 082 132
- CH-A- 454 440
- DE-A1- 1 658 939
- DE-A1- 2 252 255
- DE-A1- 10 208 362
- DE-A1-102007 058 861

## Beschreibung

Die Erfindung betrifft ein Ausgleichselement zum Nivellieren eines Anbauteils relativ zu einem Untergrund, der im Oberbegriff des Patentanspruchs 1 genannten Art.

Anbauteile, wie beispielsweise Rahmen, Handläufe oder Fassadenelemente, weisen gegenüber den strukturellen Untergründen, wie ein Boden, eine Wand oder eine Decke, die z. B. aus Materialen wie Beton oder Mauerwerk hergestellt sind, unterschiedliche Anforderungen in Bezug auf deren Genauigkeit in der Ausführung auf. Die Anbauteile werden mit Befestigungsvorrichtungen, welche Befestigungselemente umfassen, am Untergrund befestigt.

Aus der DE 102 08 362 A1 ist beispielsweise eine mechanische Justiervorrichtung als Ausgleichselement bekannt, die einen mit einem Gewinde versehenen Bolzen umfasst, der in ein Gewinde an einem Abstützelement eingreift und zum Nivellieren des Abstützelementes zu diesem relativ axial versetzbar ist.

Nachteilig an dieser bekannten Lösung ist, dass diese Justiervorrichtung einen grossen Platzbedarf zu deren Anordnung und deren Betätigung benötigt sowie aufgrund der komplexen Ausgestaltung teuer ist.

Weiter sind als Ausgleichselement massive, beispielsweise U-förmige Scheibenelemente bekannt, die unterschiedliche Materialdicken aufweisen und die um das Befestigungselement herum positioniert werden. Zur Unterfütterung des Anbauteils wird eine dem gewünschten Höhenausgleich entsprechende Anzahl der Scheibenelemente aufeinanderliegend angeordnet. Zum Nivellieren des Anbauteils muss zuerst das Anbauteil provisorisch am Untergrund festgelegt und dann entsprechend zu diesem ausgerichtet werden. Nach dem Entspannen der Befestigungselemente werden bei den einzelnen Befestigungselementen zusätzliche Scheibenelemente vorgesehen oder zuvor zuviel angeordnete Scheibenelemente entfernt. Dann werden die Befestigungselemente erneut verspannt und eine Kontrollmessung durchgeführt. Sofern die Ausrichtung des Anbauteils noch nicht exakt ist, müssen die vorgenannten Schritte wiederholt werden, bis die gewünschte Ausrichtung des Anbauteils erreicht ist.

Nachteilig an dieser bekannten Lösung ist, dass zur Nivellierung des Anbauteils eine Vielzahl von Arbeitsschritten erforderlich ist und daher die Montage der Anbauteile sehr zeitaufwändig sowie kostenintensiv ist.

Aus der DE 10 2007 058 861 A1 ist ein Ausgleichselement zum Nivellieren eines Anbauteils relativ zum Untergrund bekannt, das einen elastischen Grundkörper und ein aushärtbares Mittel aufweist, das in einzelnen Kammem im Grundkörper vorgesehen ist.

Nachteilig an dieser bekannten Lösung ist, dass der Grundkörper mit einzelnen Kammem zur Aufnahme des aushärtbaren Mittels versehen sein muss und somit der Grundkörper eine inhomogene Kompressibilität aufweist, welche für eine exakte Ausrichtung des Anbauteils hinderlich ist.

Die DE 22 52 255 A1 offenbart ein Plattenlager zum Verlegen von Stein- und Kunststeinplatten, welches aus einer verformbaren Elastomermasse entsteht, die in einer besonderen Verpackung enthalten ist und die Eigenschaft hat, dass sie nach dem Abreissen der Seitenwände durch den Lufteintritt nach dem Verlegen der Platten aushärtet.

Die CH 45 44 40 A beschreibt ein Verfahren zum Herstellen eines formfesten Leichtbaumaterials auf Kunstschaumbasis, bei dem nachgiebig biegbares und walkbares Kunstschwamm-Material mit offenen, gegenseitig verbundenen Poren mit einer aushärtbaren Kunstharzflüssigkeit bis zur Benetzung mindestens eines Grossteiles der inneren Porenflächen durchtränkt wird, überschüssige Kunstharzflüssigkeit ausgepresst wird und das so erhaltene klebstoffdurchtränkte Kunstschwamm-Material nach gewünschter Formung ausgehärtet wird.

Aufgabe der Erfindung ist es, ein Ausgleichselement zum Nivellieren eines Anbauteils relativ zu einem Untergrund zu schaffen, das einfach anwendbar ist und dabei eine exakte Ausrichtung des Anbauteils ermöglicht.

Die Aufgabe ist durch die Merkmale des unabhängigen Anspruchs gelöst. Vorteilhafte Weiterbildungen sind in den Unteransprüchen dargelegt.

Die Erfindung zeichnet sich dadurch aus, dass der Grundkörper ein offenporiger Schaumkörper ist, in dessen Poren das aushärtbare Mittel vorgesehen ist, und dass der Grundkörper komprimiert und mit einem entfernbaren Haltemittel im komprimierten Zustand gehalten ist.

Gemäss der Erfindung ist der elastische Grundkörper ein offenporiger Schaumkörper, in dessen Poren das aushärtbare Mittel vorgesehen ist.

Dieser Grundkörper passt sich in vorteilhafter Weise an die Struktur der entsprechenden Oberfläche des Untergrundes wie auch an die Struktur der entsprechenden Oberfläche des Anbauteils an und weist bevorzugterweise im Wesentlichen über sein gesamtes Volumen eine gleichmässige Komprimierbarkeit auf. Da das aushärtbare Mittel vorteilhaft über das gesamte Volumen des Grundkörpers und fein in diesem verteilt ist, wird ein vollständiges Aushärten des Grundkörpers, nach der Aktivierung des aushärtbaren Mittels gewährleistet. Durch die Porigkeit des Schaumkörpers müssen keine separaten Ausnehmungen, Vertiefungen oder Hohlräume im Grundkörper ausgebildet werden, damit dieser das aushärtbare Mittel aufnehmen kann.

Das aushärtbare Ausgleichselement weist vor dem Aushärten ein gummiähnliches, federelastisches Materialverhalten auf, so dass dieses komprimierbar und somit die Position des Anbauteils einfach einstellbar ist. Beim Aushärten des aushärtbaren Mittels wird das Materialverhalten des Ausgleichselementes kontrolliert in ein steifes Starrkörperverhalten überführt, so dass dieses die im Betrieb anfallenden Lasten vollständig aufnehmen kann.

Die Aushärtung des Ausgleichselementes ist vorteilhaft derart eingestellt, dass nach der Initialisierung, z. B. durch Druck auf das Ausgleichselement, ausreichend Zeit zum Ausrichten des Anbauteils zur Verfügung steht und gleichzeitig der Aushärtvorgang ausreichend fortgeschritten ist, wenn der Nivelliervorgang abgeschlossen ist. Um bei grossen Längen des Anbauteils, z. B. bei Fassadenelementen, eine ausreichende Korrekturmöglichkeit zur Verfügung zu haben, sollte die Aushärtzeit des aushärtbaren Mittels im Bereich von etwa fünf bis sieben Stunden liegen. Je nach Anwendung kann die Aushärtzeit des aushärtbaren Mittels von ein paar wenigen Minuten bis ein paar Stunden eingestellt sein. Desto einfacher die Nivellierung des Anbauteils ist, desto kürzer kann die Aushärtzeit des aushärtbaren Mittels eingestellt werden.

Vorteilhaft ist der Grundkörper quaderförmig oder scheibenförmig ausgebildet, so dass eine ausreichend grosse Anlagefläche zur Anlage am Untergrund beziehungsweise für das Anbauteil zur Verfügung steht. Des Weiteren sind auch andere beliebige, z. B. auf bestimmte Randbedingungen am Applikationsort abgestimmte Konfektionierungen beziehungsweise Ausbildungen des Grundkörpers möglich.

Vorteilhaft weist der Grundkörper bis zu einer 80%-igen Komprimierung eine konstante Federrate auf, womit ein Ausdehnen des Ausgleichelementes beim Lösen eines verspannten Befestigungselementes zum Nachnivellieren des Anbauteils gewährleistet ist.

Erfindungsgemäss ist der Grundkörper ein offenporiger Schaumkörper, womit das aushärtbare Mittel einfach in dem Grundkörper angeordnet und in diesem verteilt werden kann. Ein Ausgleichselement mit einem derartigen Grundkörper härtet vollständig aus und gewährleistet die Übernahme der im Betrieb anfallenden Lasten.

Bevorzugt ist der Grundkörper mehrschichtig, wobei zumindest zwei Schichten jeweils unterschiedliche Raumdichte aufweisen. Die Verformungseigenschaften des Grundkörpers lassen sich damit in vorteilhafter Weise beeinflussen und steuern, da die zumindest eine Schicht mit der geringeren Raumdichte in Bezug auf die zumindest eine andere Schicht weicher und damit leichter verformbar ist. Zumindest eine der mehreren Schichten ist ein offenporiger Schaumkörper, in dessen Poren das aushärtbare Mittel vorgesehen ist. Vorteilhaft sind zumindest zwei der Schichten von einem offenporigen Schaumkörper gebildet und weiter vorteilhaft ist in beiden Schichten eine Menge der aushärtbaren Masse vorgesehen, womit eine vollständige Aushärtung des Grundkörpers nach Beendigung des Aushärtvorgangs der aushärtbaren Masse gewährleistet ist. Bei einem mehrschichtigen Grundkörper der mehr als zwei Schichten aufweist, sind vorteilhaft alle Schichten jeweils von einem offenporigen Schaumkörper gebildet, der entsprechend der gewünschten Eigenschaften des elastischen Grundkörpers jeweils eine entsprechende Raumdichte aufweist. Vorteilhaft sind alle Schichten mit einer ausreichenden Menge der aushärtbaren Masse vorgesehen, womit auch bei einem derartigen Grundkörper eine vollständige Aushärtung des Grundkörpers nach Beendigung des Aushärtvorgangs der aushärtbaren Masse gewährleistet ist.

Vorzugsweise weist zumindest die an der Aussenseite des Grundkörpers vorgesehene Schicht eine geringere Raumdichte als die dazu benachbarte Schicht des Grundkörpers auf, so dass sich der Grundkörper beim Verspannen des Befestigungselementes vorteilhaft an die Struktur der entsprechenden Oberfläche des Untergrundes und/oder an die Struktur der entsprechenden Oberfläche des Anbauteils anpasst. Weist die mit dem Ausgleichselement in Kontakt kommende Oberfläche des Untergrundes und/oder des Anbauteils abragende beziehungsweise vorstehende Elemente auf, können diese in die Schicht mit der geringeren Raumdichte einfach eindringen, womit ein Formschluss zwischen dem Untergrund und/oder dem Anbauteil und dem Ausgleichselement geschaffen wird. Vorteilhaft weist der Grundkörper an beiden Seiten, die mit dem Untergrund beziehungsweise mit dem Anbauteil in Anlage kommen jeweils eine Schicht mit einer geringeren Raumdichte und somit einen leicht verformbaren Abschnitt auf.

Bevorzugt ist das aushärtbare Mittel ein Fluid und somit einfach z. B. bei der Fertigung des Grundkörpers in diesem anordnenbar. Das Fluid ist vorteilhaft eine Flüssigkeit und wird beispielsweise dem Material des Grundkörpers beigemischt oder nach der Fertigung des Grundkörpers in diesem angeordnet. Beispielsweise wird der Grundkörper mit dem Fluid besprüht beziehungsweise mit diesem bespritzt oder über in das Material des Grundkörpers eindringende Vorrichtungen in diesen eingespritzt.

Vorzugsweise ist der Grundkörper mit dem Fluid getränkt, womit dieser vorteilhaft mit dem aushärtbaren Mittel versehen werden kann. Beispielsweise wird das Fluid in einem Becken eingefüllt, in welches der Grundkörper eingelegt oder durch welches der Grundkörper, z. B. in einem Endlosverfahren, hindurchgezogen wird. Ist der Grundkörper ein offenporiger Schaumkörper, dringt beim Tränken des Grundkörpers mit dem Fluid dieses in die Poren ein und gewährleistet eine feine Verteilung desselben innerhalb des Grundkörpers.

Bevorzugt umfasst das aushärtbare Mittel ein bei Luftkontakt reagierendes Fluid und der Grundkörper ist luftdicht versiegelt, so dass erst nach dem Öffnen der Versiegelung der Aushärtvorgang des aushärtbaren Mittels gestartet wird. Ein Aushärten des Ausgleichselementes während dem Transport oder während dessen Lagerung wird durch die luftdichte Versiegelung verhindert. Die Versiegelung umfasst vorteilhaft eine geeignete Folie, welche den Grundkörper vorteilhaft vollständig umgibt.

Vorzugsweise ist der Grundkörper komprimiert und mit einem entfernbaren Haltemittel im komprimierten Zustand gehalten, womit er einfach versetzt werden kann und nach dem Entfernen des Haltemittels dessen Komprimierung aufgehoben wird. Aufgrund der dabei resultierenden Ausdehnung wird der Raum zwischen dem Untergrund und dem Anbauteil ausgefüllt und dieses unterfüttert. Der Grundkörper wird z. B. unter Reduktion seiner Materialdicke gewalzt und anschliessend vorteilhaft mit einem Verpackungsmittel, wie eine Folie, im komprimierten Zustand verpackt und von diesem bis zur Verwendung des Ausgleichselement in diesem Zustand gehalten. Ist das aushärtbare Mittel ein unter Umgebungsbedingungen aushärtbares Mittel, wird vorteilhaft beim Ausdehnen des zuvor komprimierten Grundkörpers das den Aushärtvorgang initiierende Medium dem aushärtbaren Mittel zugeführt, so dass der Aushärtvorgang des aushärtbaren Mittels startet.

Bevorzugt ist ein feuerhemmendes Mittel im Grundkörper vorgesehen, welches im Brandfall ein sofortiges Versagen der erstellten Befestigung des Anbauteils in diesem Bereich verhindert. Vorteilhaft umfasst das feuerhemmende Mittel intumeszierende Mittel, welche im Brandfall expandieren und eine Ausbreitung des Feuers durch den Spalt zwischen dem Untergrund und dem Anbauteil zumindest behindern, wenn nicht vollständig verhindern. Alternativ oder ergänzend dazu umfasst das feuerhemmende Mittel ablative Mittel, welche im Brandfall die Befestigung Anbauteils in diesem Bereich kühlen.

Vorzugsweise ist zumindest eine Durchführöffnung für ein Befestigungselement in dem Grundkörper vorgesehen, so dass im montierten Zustand das Ausgleichselement das durch diesen hindurchgeführte Befestigungselement von diesem umgeben ist. Durch eine solche Anordnung des Ausgleichselementes in Bezug auf das Befestigungselement ist eine exakte Ausrichtung des Anbauteils in vorteilhafter Weise möglich.

Die Erfindung wird nachstehend anhand von Ausführungsbeispielen näher erläutert. Es zeigen:
Fig. 1 Eine Anordnung eines Anbauteils mit zwei Ausgleichselementen im montierten Zustand;
Fig. 2 eines der in der Fig. 1 gezeigten Ausgleichselemente in einer Perspektive;
Fig. 3 ein zweites Ausführungsbeispiel eines Ausgleichselementes im Schnitt; und
Fig. 4 ein drittes Ausführungsbeispiel eines Ausgleichselementes im Schnitt.

Grundsätzlich sind in den Figuren gleiche Teile mit den gleichen Bezugszeichen versehen.

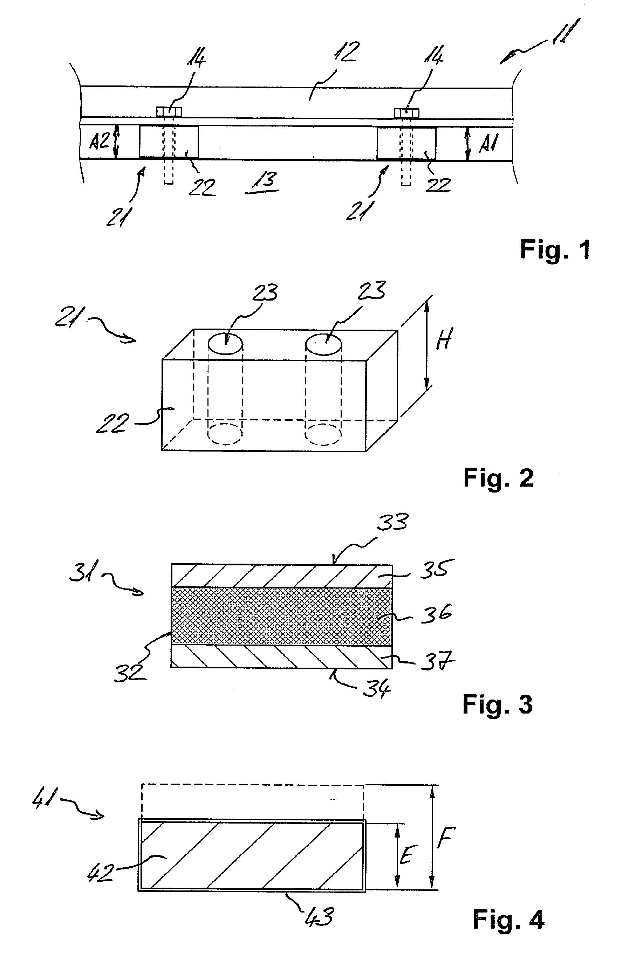

Das in der Figur 1 im montierten Zustand und in der Figur 2 im entspannten Zustand dargestellte Ausgleichselement 21 zum Nivellieren eines Anbauteils 12 relativ zu einem Untergrund 13 weist einen elastischen Grundkörper 22, der ein vorteilhaft offenporiger Schaumkörper ist, und ein im Grundkörper 22 vorgesehenes aushärtbares Mittel auf, das in dessen Poren vorgesehen ist. Der Grundkörper 22 und somit das Ausgleichselement 21 weist im unmontierten Zustand eine Höhe H auf. Der Grundkörper 22 weist weiter bis zu einer 80%-igen Komprimierung eine konstante Federrate auf. Im Grundkörper 22 sind zwei Durchführöffnungen 23 für Befestigungselemente 14 vorgesehen.

Der Grundkörper 22 ist mit einem Fluid als aushärtbares Mittel getränkt und ist weiter mit einem feuerhemmenden Mittel versehen.

Der Grundkörper 22 ist beispielsweise aus einem geschäumten Duroplast, aus einem geschäumten Elastomer oder aus einem geschäumten Thermoplast gefertigt. Dazu geeignete Duroplaste sind z. B. gehärtetes Epoxid, Silicon oder Polyurethan. Geeignete geschäumte Elastomere sind z. B. aus der Gruppe der TPE-U / TPU (z.B. TPE-O oder TPO = Thermoplastische Elastomere auf Olefinbasis, vorwiegend PP/EPDM, z. B. Santoprene (Firma AES/Monsanto); TPE-V oder TPV = Vernetzte thermoplastische Elastomere auf Olefinbasis, vorwiegend PP/EPDM, z. B. Sarlink (Firma DSM), Forprene (Firma SoFter); TPE-U oder TPU = Thermoplastische Elastomere auf Urethanbasis, z. B. Desmopan, Texin, Utechllan (Firma Bayer); TPE-E oder TPC = Thermoplastische Copolyester, z. B. Hytrel (Firma DuPont); TPE-S oder TPS = Styrol-Blockcopolymere (SBS, SEBS, SEPS, SEEPS und MBS), z. B. Septon (Firma Kuraray) oder Thermolast K (Firma Kraiburg); TPE-A oder TPA = Thermoplastische Copolyamide, z. B. PEBAX (Firma Arkema). Dazu geeignete geschäumte Thermoplaste sind z. B. Acrylnitril-Butadien-Styrol (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetherketon (PEEK) und Polyvinylchlorid (PVC).

Das aushärtbare Mittel ist bevorzugt feuchtigkeitshärtend, und umfasst bevorzugt ein Isocyanat, Zement, Silicon oder Cyanacrylat. Wird das aushärtbare Mittel nachträglich in den Grundkörper eingebracht, umfasst das aushärtbare Mittel bevorzugt Epoxide, Vinylester oder einen Schmelzkleber.

Zur Nivellierung des Anbauteils 12 relativ zu dem Untergrund 13 (siehe Anordnung 11 gemäss Figur 1) werden zuerst entsprechend der Anzahl der Befestigungselemente 14 mehrere Ausgleichselemente 21 am Untergrund vorgesehen und dann das Anbauteil 12 auf diese aufgelegt. Die Ausgleichselemente 21 weisen im unausgehärteten Zustand eine Eigensteifigkeit auf, welche zur Aufnahme des Eigengewichtes des Anbauteils 12 ausreicht. Über die im Untergrund 13 verankerten Befestigungselemente 14 werden die Ausgleichselemente 21 in ihrer Höhe H auf die erforderliche reduzierte Höhe A1 bzw. A2 reduziert, um das Anbauelement 12 auszunivellieren. Je nach Ausrichtung des Untergrundes 13 beziehungsweise der Genauigkeit der Oberfläche des Untergrundes 13 weisen die Ausgleichselemente 21 im montierten Zustand unterschiedliche Komprimierungsgrade und somit unterschiedlich reduzierte Höhen A1 bzw. A2 auf.

Vorteilhaft startet bereits beim Anordnen des Ausgleichselementes 21 der Aushärtvorgang des aushärtbaren Mittels, wobei das Ausgleichselement 21 zumindest zu Beginn der Aushärtzeit für einen vorbestimmten Zeitraum weiterhin komprimierbar und flexibel ist. Nach dem Aushärten des aushärtbaren Mittels weist das Ausgleichselement 21 eine hohe Steifigkeit auf und ist mit der gesamten Last belastbar.

Das in der Figur 3 gezeigte Ausgleichselement 31 weist einen mehrschichtigen, hier beispielhaft dreischichtigen elastischen Grundkörper 32 auf, wobei zumindest die Schichten 35 und 36 beziehungsweise die Schichten 36 und 37 unterschiedliche Raumdichten aufweisen. Die an der Aussenseite 33 des Grundkörpers 32 vorgesehene Schicht 35 weist eine geringere Raumdichte als die dazu benachbarte, mittlere Schicht 36 auf. Auch die an der anderen Aussenseite 34 des Grundkörpers 32 vorgesehene Schicht 37 weist eine geringere Raumdichte als die dazu benachbarte, mittlere Schicht 36 auf. Dadurch sind die aussenliegenden Schichten 35 und 37 im Vergleich zu der mittleren Schicht 36 weicher und passen sich einfach an die Struktur der entsprechenden Oberfläche des Untergrundes 13 wie auch an die Struktur der entsprechenden Oberfläche des Anbauteils 12 an. In diesem Ausführungsbeispiel sind alle Schichten 35, 36 und 37 jeweils von einem offenporigen Schaumkörper gebildet, der entsprechend der gewünschten Eigenschaften jeweils eine entsprechende Raumdichte aufweist. In jeder Schicht 35, 36 und 37 ist dem jeweiligen Volumen entsprechend eine bestimmte Menge der aushärtbaren Masse vorgesehen, so dass der Grundkörper 32 als Gesamtes zu einem starren Körper aushärtet.

Das in der Figur 4 gezeigte Ausgleichselement 41 weist einen elastischen Grundkörper 32 in Form eines offenporigen Schaumkörpers auf, der mit einem flüssigen aushärtbaren Mittel getränkt ist. Das aushärtbare Mittel umfasst ein bei Luftkontakt reagierendes Fluid. Der Grundkörper 42 ist auf eine Höhe E komprimiert, welche etwa zwei Drittel der ursprünglichen Höhe F des Grundkörpers 42 (gestrichelt dargestellt) entspricht. Der komprimierte Grundkörper 42 ist vollständig von einer Folie als entfernbares Haltemittel 43 im komprimierten Zustand gehalten und luftdicht von dieser versiegelt.

Nach dem Entfernen des Haltemittels 43 dehnt sich der Grundkörper 42 aufgrund seiner Federelastizität auf seine ursprüngliche Höhe F aus. Bei dem Ausdehnen des getränkten Grundkörpers 42 dringt Luft bis in das Innere des Grundkörpers 42, wobei die Aushärtung des bei Luftkontakt reagierenden Fluids startet. In diesem Zustand des Ausgleichselementes 41 ist dieses weiterhin flexibel und erlaubt eine einfache Ausrichtung des zu nivellierenden Anbauteils 12. Nach der vollständigen Aushärtung sind über das Ausgleichselement 41 die im Betrieb anfallenden Lasten übertragbar.

## Patentansprüche

1. Ausgleichselement zum Nivellieren eines Anbauteils (12) relativ zu einem Untergrund (13) mit einem elastischen Grundkörper (22; 32; 42) und mit einem im Grundkörper (22; 32; 42) vorgesehenen aushärtbaren Mittel,
wobei das Ausgleichselement vor dem Aushärten ein elastisches Materialverhalten aufweist und beim Aushärten des aushärtbaren Mittels das Materialverhalten des Ausgleichselementes in ein steifes Verhalten überführt wird, **dadurch gekennzeichnet,**
**dass**
der Grundkörper (22; 32; 42) ein offenporiger Schaumkörper ist, in dessen Poren das aushärtbare Mittel vorgesehen ist, und
**dass** der Grundkörper (42) komprimiert und mit einem entfernbaren Haltemittel (43) im komprimierten Zustand gehalten ist.

2. Ausgleichselement nach Anspruch 1, **dadurch gekennzeichnet, dass** der Grundkörper (32) mehrschichtig ist, wobei zumindest zwei Schichten (35, 36, 37) jeweils unterschiedliche Raumdichte aufweisen.

3. Ausgleichselement nach Anspruch 2, **dadurch gekennzeichnet, dass** zumindest die an der Aussenseite (33, 34) des Grundkörpers (32) vorgesehene Schicht (35, 37) eine geringere Raumdichte als die dazu benachbarte Schicht (36) des Grundkörpers (32) aufweist.

4. Ausgleichselement nach einem der Ansprüche 1 bis 3, **dadurch gekennzeichnet, dass** das aushärtbare Mittel ein Fluid ist.

5. Ausgleichselement nach Anspruch 4, **dadurch gekennzeichnet, dass** der Grundkörper (22; 32; 42) mit dem Fluid getränkt ist.

6. Ausgleichselement nach Anspruch 4 oder 5, **dadurch gekennzeichnet, dass** das Fluid ein bei Luftkontakt reagierendes Fluid ist und der Grundkörper (42) luftdicht versiegelt ist.

7. Ausgleichselement nach einem der Ansprüche 1 bis 6, **dadurch gekennzeichnet, dass** ein feuerhemmendes Mittel im Grundkörper (22) vorgesehen ist.

8. Ausgleichselement nach einem der Ansprüche 1 bis 7, **dadurch gekennzeichnet, dass** zumindest eine Durchführöffnung (23) für ein Befestigungselement (14) in dem Grundkörper (22) vorgesehen ist.

## Claims

1. Compensating element for levelling an attachment (12) relative to a substrate (13), having an elastic base body (22; 32; 42) and having hardenable means provided in the base body (22; 32; 42), wherein the compensating element has an elastic material behaviour before the hardening and, during hardening of the hardenable means, the material behaviour of the compensating element is converted to a rigid behaviour, **characterised in that** the base body (22; 32; 42) is an open-pored foam body in the pores of which the hardenable means is provided, and **in that** the base body (42) is compressed and is held in the compressed state by a removable holding means (43).

2. Compensating element according to claim 1, **characterised in that** the base body (32) is multi-layered wherein at least two layers (35, 36, 37) each have different spatial densities.

3. Compensating element according to claim 2, **characterised in that** at least the layer (35, 37) provided at the outside (33, 34) of the base body (32) has a lower spatial density than the layer (36) of the base body (32) adjacent to the layer (35, 37).

4. Compensating element according to one of the claims 1 to 3, **characterised in that** the hardenable means is a fluid.

5. Compensating element according to claim 4, **characterised in that** the base body (22; 32; 42) is impregnated with the fluid.

6. Compensating element according to claim 4 or 5, **characterised in that** the fluid is a fluid reacting on contact with air and the base body (42) is sealed airtight.

7. Compensating element according to one of the claims 1 to 6, **characterised in that** a fire-retardant means is provided in the base body (22).

8. Compensating element according to one of the claims 1 to 7, **characterised in that** at least one feed-through opening (23) for a fastening element (14) is provided in the base body (22).

## Revendications

1. Elément d'équilibrage servant à mettre à niveau une pièce rapportée (12) par rapport à un sol (13), comprenant un corps de base (22 ; 32 ; 42) élastique et un moyen durcissable prévu dans le corps de base (22 ; 32 ; 42),
sachant que le matériau du moyen d'équilibrage présente, avant le durcissement, un comportement élastique et que le matériau de l'élément d'équilibrage devient rigide lorsque le moyen durcissable est durci, **caractérisé en ce**
**que** le corps de base (22 ; 32 ; 42) est un corps en mousse à pores ouverts, dans les pores duquel est prévu le moyen durcissable, et
en ce que le corps de base (42) est comprimé et est maintenu dans l'état comprimé à l'aide d'un moyen de retenue (43) amovible.

2. Elément d'équilibrage selon la revendication 1, **caractérisé en ce que** le corps de base (32) est multicouche, sachant qu'au moins deux couches (35, 36, 37) présentent respectivement diverses masses volumiques.

3. Elément d'équilibrage selon la revendication 2, **caractérisé en ce qu'**au moins la couche (35, 37) prévue au niveau du coté extérieur (33, 34) du corps de base (32) présente une masse volumique plus faible que la couche (36), qui lui est adjacente, du corps de base (32).

4. Elément d'équilibrage selon l'une quelconque des revendications 1 à 3, **caractérisé en ce que** le moyen durcissable est un fluide.

5. Elément d'équilibrage selon la revendication 4, **caractérisé en ce que** le corps de base (22 ; 32 ; 42) est imprégné du fluide.

6. Elément d'équilibrage selon la revendication 4 ou 5, **caractérisé en ce que** le fluide est un fluide réagissant au contact de l'air, et **en ce que** le corps de base (42) est scellé de manière à être étanche à l'air.

7. Elément d'équilibrage selon l'une quelconque des revendications 1 à 6, **caractérisé en ce qu'**est prévu dans le corps de base (22) un moyen ignifuge.

8. Elément d'équilibrage selon l'une quelconque des revendications 1 à 7, **caractérisé en ce qu'**au moins une ouverture de passage (23) est prévue pour un élément de fixation (14) dans le corps de base (22).
